Europäisches Patentamt

European Patent Office

Office européen des brevets

(11) Publication number: **0 296 430**
**A2**

## EUROPEAN PATENT APPLICATION

(21) Application number: **88109289.4**

(22) Date of filing: **10.06.88**

(51) Int. Cl.⁴: **G06F 12/08**

(30) Priority: **22.06.87 US 65238**

(43) Date of publication of application:
**28.12.88 Bulletin 88/52**

(84) Designated Contracting States:
**DE FR GB**

(71) Applicant: **International Business Machines
Corporation
Old Orchard Road
Armonk, N.Y. 10504(US)**

(72) Inventor: **Liu, Lishing
196 Deerfield Lane North
Pleasantville N.Y. 10570(US)**

(74) Representative: **Grant, Iain Murray et al
IBM United Kingdom Limited Intellectual
Property Department Hursley Park
Winchester Hampshire SO21 2JN(GB)**

(54) Sequential prefetching with deconfirmation.

(57) A computer memory management method for cache memory (10) uses a deconfirmation technique to provide a simple sequential prefetching algorithm. Access sequentiality is predicted based on simple histories. Each memory line in cache memory is associated with a bit in an S-vector (20), which is called the S-bit for the line. When the S-bit is on, sequentiality is predicted meaning that the sequentially next line is regarded as a good candidate for prefetching, if that line is not already in the cache memory. The key to the operation of the memory management method is the manipulation (turning on and off) the S-bits.

FIG. 2

## SEQUENTIAL PREFETCHING WITH DECONFIRMATION

### Field of the Invention

The present invention is generally related to computer memory management techniques and, more particularly, to a deconfirmation technique to provide a simple sequential prefetching algorithm implementation in cache memory.

### Description of the Prior Art

Modern high-performance stored program digital computers conventionally fetch instructions from main memory and store the fetched instructions in a cache memory. A cache memory is a relatively small high speed hardware buffer that interfaces with the central processing unit (CPU) of the computer. Because an instruction in cache can be immediately accessed by the CPU, caches have been used to speed up computer performance. The basic idea is to prefetch instructions from main memory based on a prediction algorithm and store the prefetched instructions in the cache memory. When the next instruction in a sequence of instructions is required by the CPU, a determination is first made as to whether the instruction is already in cache memory (a cache hit) or not (a cache miss), and if it is, to read the instruction from cache to the CPU, otherwise to read the instruction from main memory, a process which can take several CPU cycles and significantly degrades computer performance. The goal is to make the prefetch algorithm as accurate as possible and thereby minimize cache misses without excessive prefetch traffic.

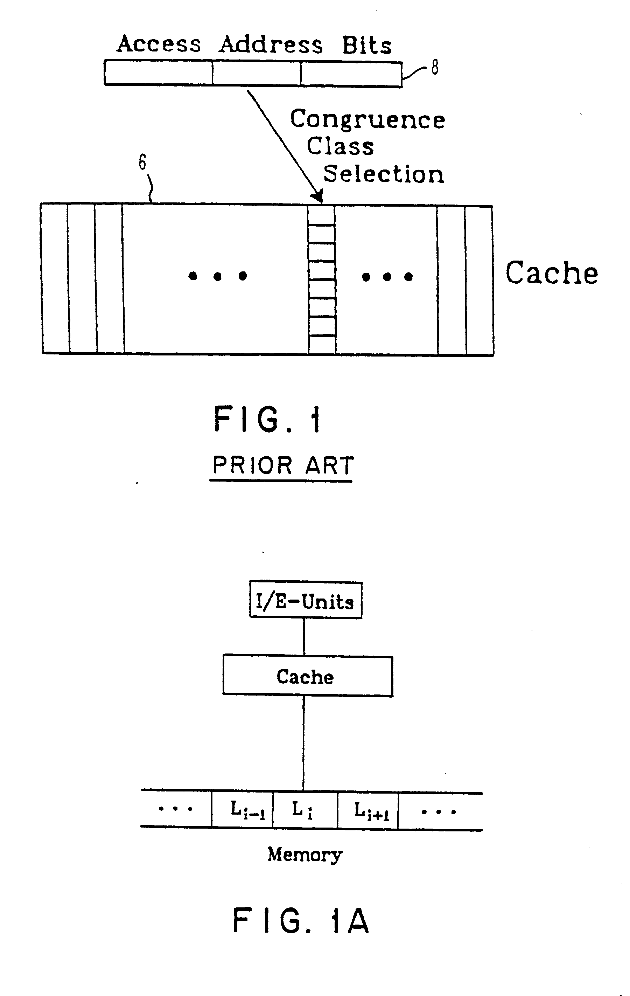

Caches are normally organized as a two-dimensional table as illustrated in Figure 1. Each memory access from the instruction or execution (I/E) units of the CPU is indexed to a particular column, called a congruence class, of the cache 6. Such indexing is via some fixed bits in the memory access address 8. Within each congruence class, there are a fixed number of lines in cache. The number of lines in each congruence class is called the set-associativity of the cache. Such a cache access results in a cache miss if the line is not found in the congruence class. The cache directory control manages a certain priority for each congruence class, which indicates relatively how recently each line in the congruence class was accessed. Within a congruence class, a line that was last accessed is called the MRU (Most-Recently-Used), while the line that was accessed the longest time ago is called the LRU (Least-Recently-Used). Normally, when a replacement is needed in a congruence class, as for example the insertion of a new line, the LRU entry will be selected to be replaced. Each time a line is accessed in the cache, it will be reflected properly as the MRU in its congruence class.

High speed processor performance relies heavily on a high hit ratio to cache. One way to enhance the cache hit ratio is to anticipate the access of certain lines beforehand and fetch them into the cache even before they are requested by the I/E-units. In this way, the delay cycles associated with a main memory fetch upon a cache miss will be saved or reduced. However, predicting accesses beforehand is not easy, especially when it is also desired to have higher accuracy in the prediction mechanisms.

Prefetch algorithms are generally based on observed behavior of computer programs. For example, locality is a strong property that is observed in almost all programs. It means that memory accesses tend to concentrate on relatively few data blocks during any short time interval.

The subject invention is concerned with sequential prefetching of cache lines using a prediction scheme based on a special type of locality behavior, which is referred to herein as sequentiality. Sequentiality means that, when a line is accessed by a processor, the sequentially next line tends to be, but is not always, accessed soon thereafter. Consider, for example, the set of lines in the memory ordered according to addresses into a set $\{L_i\}$. Upon an access to $L_i$, a decision may be made to prefetch $L_{i+1}$ into the cache if it is not resident there. However, it is known to be important to recognize whether a prefetched line has potential to be referenced in order to reduce penalties on traffic and cache replacements. Hence, if the physically sequential next line is prefetched into the cache upon a current access, the miss penalties associated with a main memory access may be saved if indeed the prefetched line is accessed by the I/E-units shortly afterwards. The subject invention is specifically directed to ways of improving the prediction accuracy and realizing the improved accuracy in practice.

### SUMMARY OF THE INVENTION

It is therefore an object of this invention to provide a technique for prefetching of instructions in a stored program digital computer with substantial cache miss reduction and high prefetch accuracy thereby improving the performance of the computer.

It is another object of the present invention to provide an inexpensive and easily implemented instruction prefetch technique which accurately predicts access sequentiality based on simple histories.

According to the invention, a simple prefetching algorithm is implemented using deconfirmation techniques. The basic concept of the invention is illustrated for sequential prefetching of instruction lines (I-lines). First, consider a bit (R-bit) per cache line entry, which indicates whether the current line at the entry has actually been accessed. For each memory line $L_i$, an S-bit $(S_i)$ indicates whether prefetching of $L_{i+1}$ should be considered when $L_i$ is accessed. Initially, all S-bits and R-bits are turned on. When a line is actually accessed, which may cause a miss itself, the R-bit of the entry will be turned on. The R-bit is turned off when a prefetched line is just brought into the entry. Upon an access, e.g., from the I/E-units, to a non-MRU line, say, $L_i$, a decision is made to prefetch $L_{i+1}$ into the cache when $S_i$ is one, if $L_{i+1}$ is not resident there. When a line $L_{i+1}$ is moved out of the cache, e.g., due to replacement or other reasons, a check is made to determine whether the R-bit for the replaced line is off. If so, $S_i$ is turned off to deconfirm the sequentiality. The basic concept may be modified in varous ways, including the elimination of the R-bits.

## BRIEF DESCRIPTION OF THE DRAWINGS

The foregoing and other objects, aspects and advantages of the invention will be better understood from the following detailed description of the invention with reference to the drawings, in which:

Figure 1 is a block diagram illustrating a conventional two-dimensional organization of a chche memory showing congruence class selection;

Figure 1A is a block diagram illustrating a conceptual picture of memory as consecutive blocks or lines;

Figure 2 is a block diagram showing the modification to cache memory control to include an S-vector;

Figure 3 is a bit map showing the cache directory entry and the relationship of the S-vector to lines of the cache memory;

Figure 4 is a flow diagram showing the basic cache access logic according to the invention;

Figure 5 is a flow diagram showing the decision logic of prefetching used in the cache access logic of Figure 4;

Figure 6 is a flow diagram showing logic for resetting the S-bits of the S-vector according to the invention;

Figure 7 is a flow diagram showing an alternative logic for resetting the S-bits of the S-vector according to the invention;

Figure 8 is a flow diagram showing another alternative logic for resetting the S-bits of the S-vector according to the invention;

Figure 9 is a flow diagram showing a modification to the basic cache access logic shown in Figure 4;

Figure 10 is a flow diagram showing an alternative decision logic of prefetching for use with the modified basic cache access shown in the flow diagram of Figure 9;

Figure 11 is a flow diagram showing another modification to the basic cache access logic of Figure 4 which uses no R-bits; and

Figure 12 is a flow diagram of the decision logic of prefetching for use with the modified basic cache access logic shown in Figure 11 using no R-bits.

## DETAILED DESCRIPTION OF THE PREFERRED EMBODIMENT OF THE INVENTION

In the cache management scheme according to the invention, the memory, as illustrated in Figure 1A, is viewed as consecutive blocks or lines . . . $L_{i-1}$, $L_i$, $L_{i+1}$ . . . . The goal is to prefetch the sequential next line into cache. The approach taken by the invention is to provide one bit per line, referred to as the S-bit, as a sequentiality flag and to manage the sequentiality flags by deconfirmation.

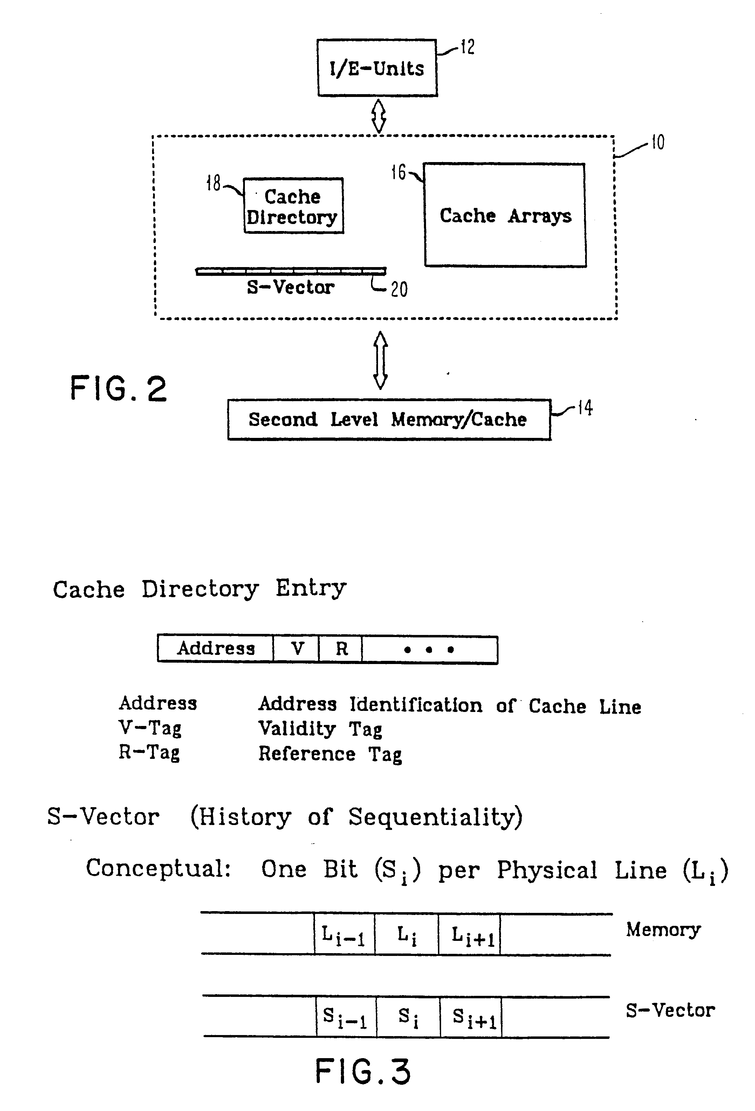

Referring now to Figure 2 of the drawings, there is shown a high level block diagram illustrating the architecture of the cache memory 10 according to the subject invention. The cache memory 10 is interposed between the I/E-units 12 and a second level memory or cache 14. The second level memory may, in the simplest case, be the main memory, but in more complex systems, it may be another level of cache memory. In any case, the memory 14 is a relatively slower memory than the cache memory 10. Cache memory 10 includes cache arrays 16, corresponding to the cache 6 shown in Figure 1, and a cache directory 18 containing the access address bits 8 shown in Figure 1. The present invention adds an S-vector 20 which is used in the deconfirmation algorithm implemented by the invention.

Figure 3 shows the cache directory entry as comprising an address which identifies a particular line in the cache array 16, a validity tag (V-tag), and a reference tag(R-tag), as well as other bits which are not pertinent to the subject invention. The R-tag or R-bit as used in this invention is to be distinguished from a memory reference bit which may be architectually defined. According to the present invention, the R-bits are used to help manipulate the S-bit histories, but as will be made clear hereinafter, the prefetching mechanism according to the invention may be implemented without using R-bits in the cache directory. The S-vector is composed of a plurality of bits equal in number to the number of lines in the main memory, there being one bit, $S_i$, per physical line, $L_i$, of the main memory. As will become clear from the following description, the S-vector provides a history of sequentiality of the lines in the cache array.

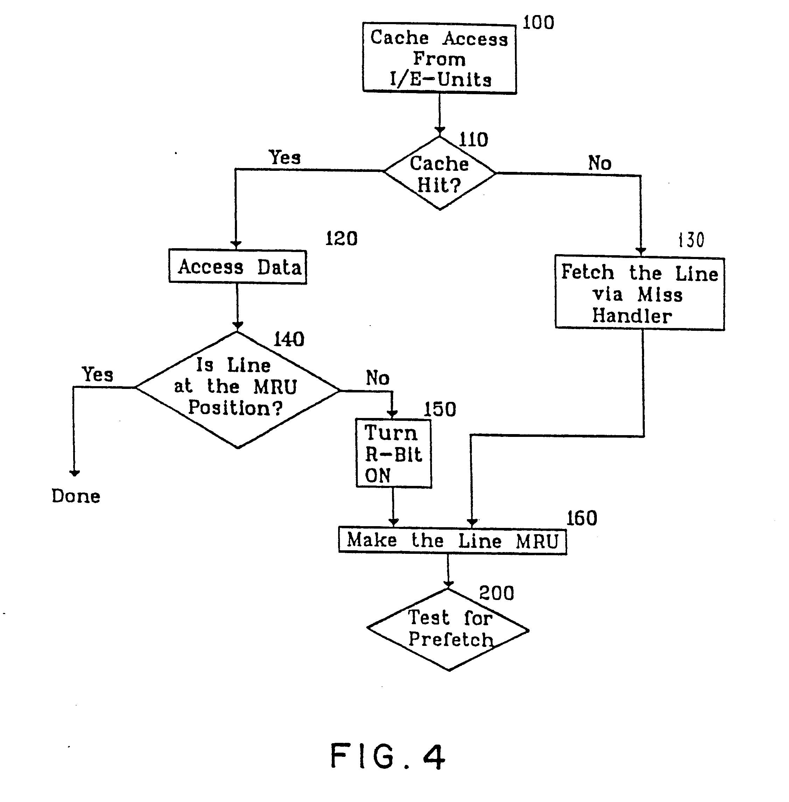

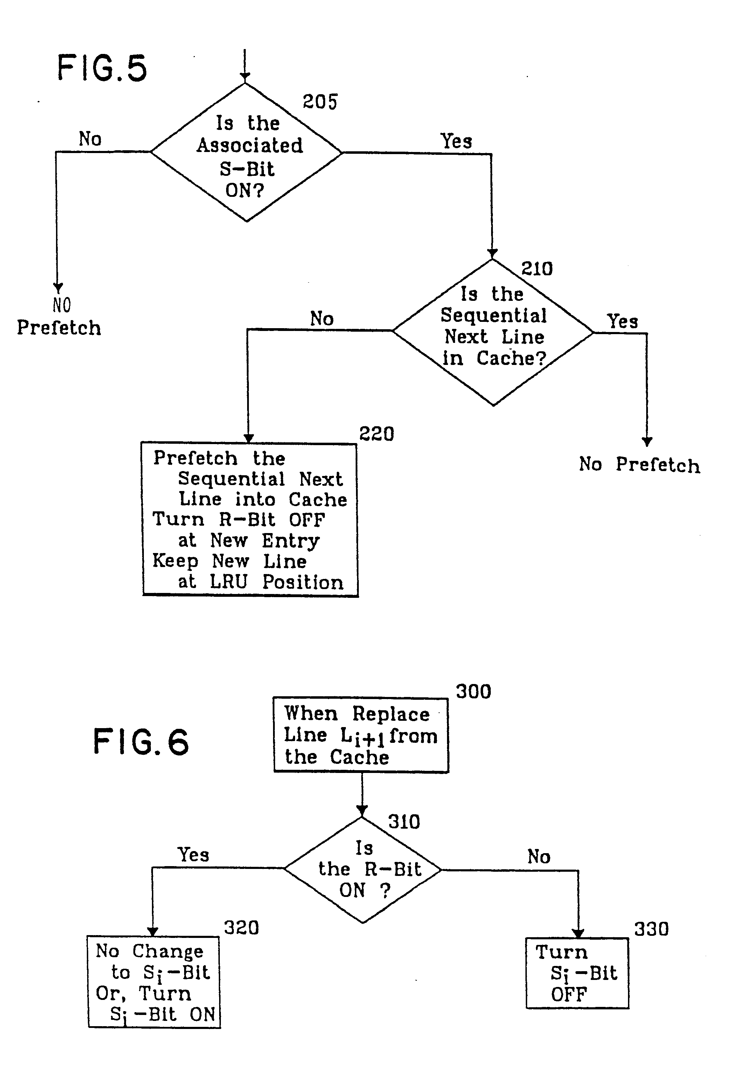

The basic cache access flow diagram is shown in Figure 4. Initially, the cache is empty, all V-bits are off, and all S-bits are on. The flow diagram is entered at block 100 when there is a cache access from the I/E-units. In decision block 110, a test is made to determine if there is a cache hit. Assuming the initial condition that the cache is empty, there will be a cache miss so the control branches to function block 130 where the requested line is fetched from main memory via the miss handler. This line is made the MRU line in function block 160, and in decision block 200, a test is made for prefetch. This test will be described in more detail in connection with the description of Figure 5.

Assume on the other hand that the test in decision block 110 is positive; i.e., there is a cache hit. In that case, the line in cache is accessed in function block 120 and data sent directly to the requesting I/E - units. A test is also made in decision block 140 to determine if the line accessed is at the MRU position of the cache. If it is, the cache access procedure is completed; otherwise, the R-bit is turned on in function block 150, and the line is made the MRU line in function block 160.

Figure 5 shows the flow diagram for the test for prefetch. This flow diagram is entered at decision block 205 by testing the S-bit associated with the line to see if it is on. If not, there is no prefetch. If the S-bit is on, then a test is made in decision block 210 to determine if the sequential next line is presently in the cache. If it is, there is no prefetch. However, if the sequential next line is not presently in cache, it is prefetched into cache in function block 220 replacing the LRU entry in its associated congruence class. At the same time, the R-bit is turned off at the new entry, and the new line is kept at the LRU position in the cache.

Key to the operation of the invention is the management of the S-bits which comprise the S-vector. The flow diagram illustrating the basic scheme for resetting of the S-bits is shown in Figure 6. The flow diagram is entered at function block 300 when line $L_{i+1}$ from the cache is replaced. A test is made in decision block 310 to determine if the R-bit for the line is on. If it is, then there is no change to the $S_i$-bit or the $S_i$-bit is turned on, depending on design choice. On the other hand, if the R-bit is not on, the $S_i$-bit is turned off.

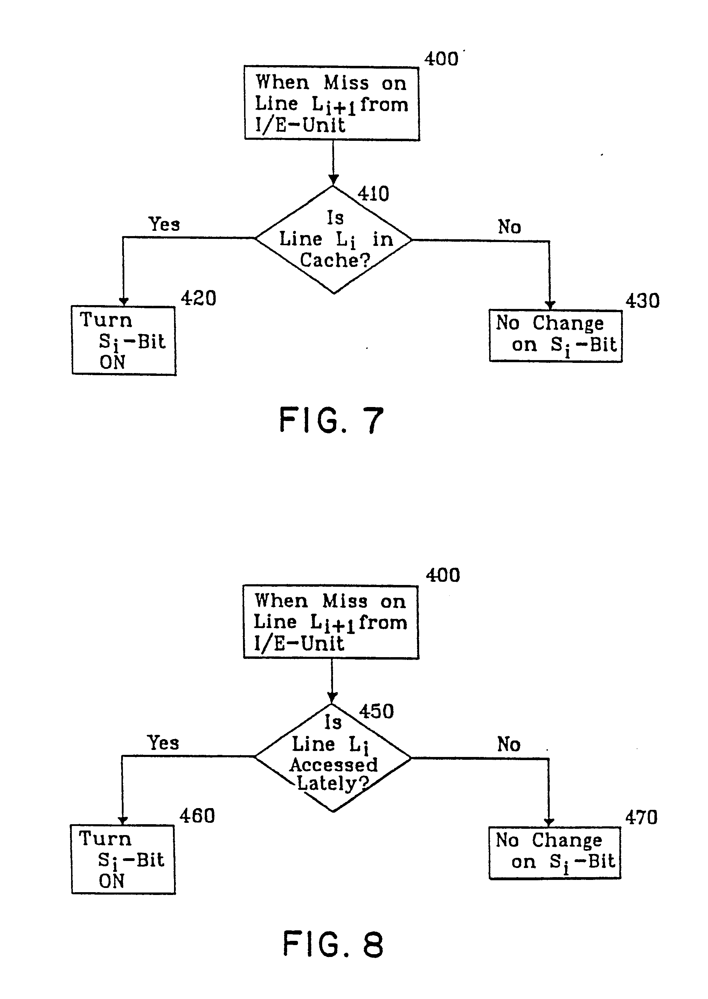

An alternative to the resetting of the S-bits is shown in the flow diagram of Figure 7. This flow diagram is entered at function block 400 when a miss occurs on line $L_{i+1}$ accessed from the I/E-units. A test is made in decision block 410 to determine if line $L_i$ is in the cache. If it is, the $S_i$-bit is turned on in function block 420, but if it is not, there is no change to the $S_i$-bit in function block 430.

A second alternative to the resetting of the S-bits is shown in Figure 8. In this case, a test is made in decision block 450 to determine if the line $L_i$ has been accessed lately. If it has, the $S_i$-bit is turned on in function block 460; otherewise, there is no change to the $S_i$-bit in function block 470.

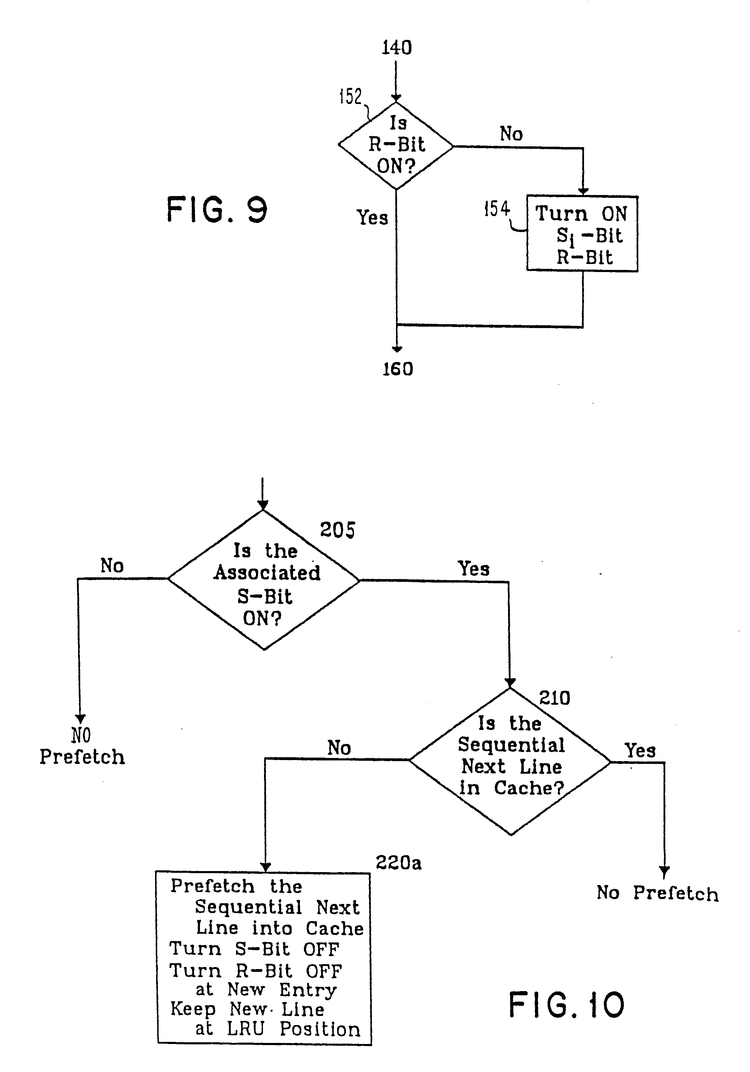

Returning briefly to Figure 4, the basic cache access procedure may be modified by replacing function block 150 with the flow diagram shown in Figure 9. More specifically, upon accessing $L_{i+1}$, a negative test output from decision block 140 is followed by a test in decision block 152 to determine if the R-bit is on. If it is, flow goes to function block 160 as before; otherewise, the R-bit and the $S_i$-bit are both turned on in function block 154 to deconfirm the sequentiality momentarily. When sequentiality of a prefetched line is detected again by the test in decision block 152, the S-bit will be again turned on.

Figure 10 shows a modification to the decision of prefetching shown in Figure 5 for use with the modification to the basic cache access logic shown in Figure 9. This modification changes function block 220 to 220a where the sequential next line is prefetched into cache as before, but in addition to turning the R-bit off at the new entry and keeping the new line at the LRU position, the S-bit is also turned off.

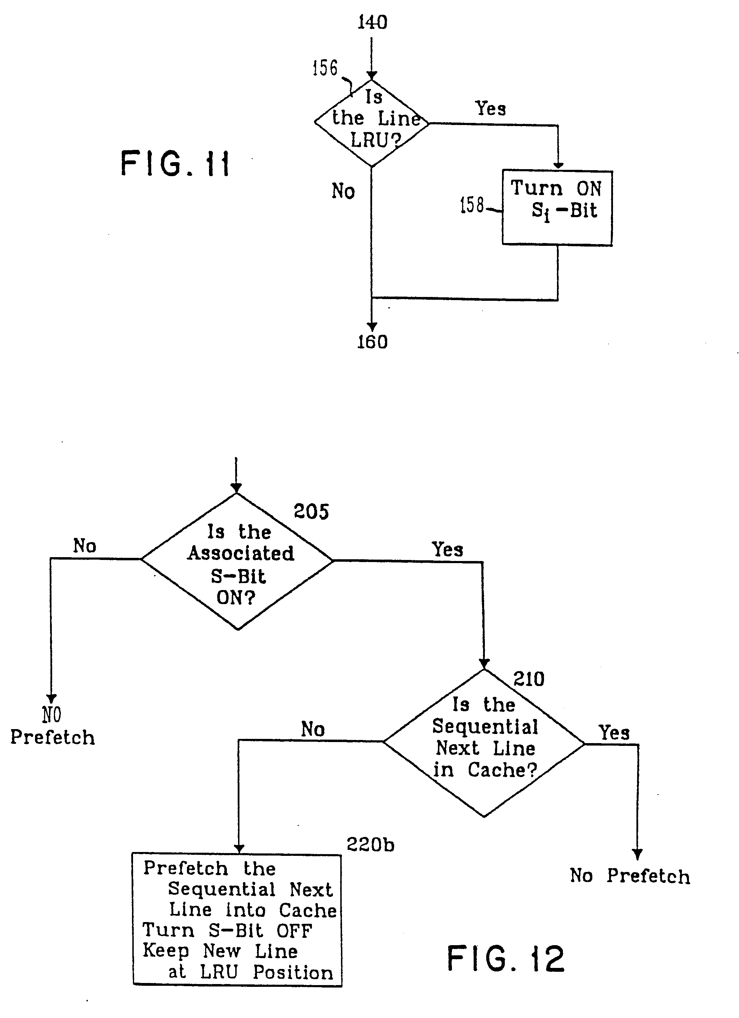

It is possible to operate the invention with no R-bits, and the modifications needed for this case are shown in Figures 11 and 12. Figure 11 is a modification of the basic cache access flow diagram shown in Figure 4 and, like Figure 9, represents a replacement for the function block 150. In this case, a test is made in decision block 156 to determine if the line is at the LRU position in cache. If not, control passes to function block 160 as before; otherwise, the $S_i$-bit is turned on in function block 158 before control passes to function block 160.

Figure 12 shows the modification of the decision of prefetching with no R-bits and represents a modification of the flow diagram shown in Figure 5. In this case, function block 220 is replaced by function block 220b where instead of turning the R-bit off at the new entry, the S-bit is turned off.

Through experiments, it was found highly desirable to prefetch instruction lines into LRU positions of a cache congruence class, instead of at the MRU position. In this case, the turning on of R-bits is practically not necessary when non-LRU lines are accessed.

It is possible to turn the S-bits back on when sequentiality is detected again. One way, referred to as the Strong Sequentiality Test, is to turn $S_i$ on when a cache miss of $L_{i+1}$ occurs when $L_i$ is found to be still in cache. This is shown in Figure 7. Another alternative is to turn $S_i$ on when a cache miss of $L_{i+1}$ occurs when the previous access was found to be on $L_i$, as shown in Figure 8.

An S-bit needs not to correspond to just one line in the memory. The trade off is between Directory space and performance. The S-bits may be implemented through a separate directory or table. The requirement is that, for any given line address, a fixed coordinate of a bit should be identified to record and test sequentiality.

The R-bits need not be physically located at the cache directory itself. When prefetches are to LRU positions, it is not necessary to associate an R-bit per cache line entry. In this case, only an R-bit per congruence class is needed, corresponding to the referenced status for the LRU positioned line. The R-bit of a congruence class is turned off only when a line is prefetched into the LRU position of the congruence class. The R-bit of the congruence class is turned on whenever the LRU line in it is actually accessed. When a line is moved out of the cache, the S-bit associated with its sequential predecessor is turned off if it is detected that the R-bit of the corresponding congruence class is still off and the R-bit is turned on after the detection. This is shown in the implementation of the base algorithm of the flow diagram in Figure 6. The R-bit vector does not need to be located physically at the cache directory and may be associated at the prefetch control. Communications between the cache directory control and the prefetching control can be implemented with rather simple signals.

In order to simplify control and communication, it may be beneficial, upon an access of $L_i$, to turn $S_i$ off when $L_{i+1}$ is determined to be prefetched. Such $S_i$ is turned on when the prefetched $L_{i+1}$ is actually accessed the first time with the associated R-bit off. This R-bit should be turned on afterwards. In this way, it is not necessary to send the address of a replaced line to the prefetch control to find the proper S-bit to turn on or off.

Sequential prefetch testing, and other associated operations, may be done upon an access of a cache line only when the R-bit for the sequential next line is on. This will reduce many redundant retesting of prefetching conditions. It is also possible, when the prefetching control tends to cause contention, to perform prefetching only upon cache misses.

It is possible to combine other prefetching schemes with the invention. For instance, it was found to be useful to improve prefetch accuracy to prefetch next line (when the S-bit is on) only when the currently accessed word is within the last 3/4 portion of the line.

In the above, what has been considered is pure LRU replacements in which an LRU line stays LRU until it is referenced or replaced. For PLRU (Partitioned LRU) replacements, it is possible to use an extra bit per congruence class for the R-vector to record the exact coordinate of the prefetched lines.

The central idea of the invention is to predict access sequentiality based on simple histories. Intuitively, the history will show the benefit of sequentiality for a line $L_i$ if the sequential next line $L_{i+1}$ was found to be active when $L_i$ was accessed the previous time. The S-vector is for the recording of such histories. Each memory line is associated with a bit in the S-vector, which is called the S-bit of the line. When the S-bit is on, sequentiality is predicted meaning that the sequentially next line is regarded as a good candidate for prefetching, if it is not already in the cache. The key to the operation of the invention is the manipulation (turning on and off) of the S-bits. The base algorithm shown in Figure 6 shows how this manipulation is accomplished. Figures 7 and 8 show alternatives to the base algorithm.

Performance studies have shown that the invention can save 39-52% of I-cache misses with an accuracy from 79% to over 94%

The invention has been described for the sequential prefetching of I-lines. The teachings of the invention may be applied to various cache organizations and for sequential prefetching of different line types.

## Claims

1. A method for prefetching lines from main memory (14) into a cache memory (10) of a computer comprising the steps of:

assigning an S-bit to each cache line, said S-bit being indicative of whether said cache line should be prefetched when a preceeding cache line is accessed said S-bit initially being set on;

testing an access to the cache memory to determine if an accessed line is in the cache memory, and if it is, accessing the line;

otherwise, fetching the accessed line from main memory;

testing the accessed line in the cache memory to determine if it is in a Most-Recently-Used position, and if it is not, making the line the Most-Recently-Used;

testing said S-bit for the accessed line to determine if it is on, and if it is, testing to determine if a sequential next line is in the cache memory; and

if said sequential next line is not in the cache memory, prefetching the sequential next line into the cache memory as a new line and keeping the new line at a Least-Recently-Used position in the cache memory

2. The method of prefetching lines into a cache memory as recited in claim 1 further comprising the steps of:

assigning an R-bit to each cache line entry, said R-bit being indicative of whether the current line at entry has actually been accessed, said R-bit initially being set on; and

when said sequential next line is prefetched into the cache memory as a new line, turning said R-bit off at said new line.

3. The method of prefetching lines into a cache memory as recited in claim 2 further comprising the step of turning said R-bit on when making an accessed line in the cache memory the Most-Recently-Used.

4. The method of prefetching lines into a cache memory as recited in claim 3 wherein when a next sequential line is replaced from the cache memory, further comprising the steps of testing the R-bit to determine if it is on, and if it is not, turning the S-bit for the preceding line in the cache memory off.

5. The method of prefetching lines into a cache memory as recited in claim 3 wherein when there is a miss on a next sequential line on an access to the cache memory, further comprising the steps of testing to determine if the preceding line is in the cache memory, and if it is, turning the S-bit for the preceding line on.

6. The method of prefetching lines into a cache memory as recited in claim 3 wherein when there is a miss on a next sequential line on an access to the cache memory, further comprising the steps of testing a preceeding line in the cache memory to determine if it has been accessed lately, and if it has, turning the S-bit on.

7. The method of prefetching lines into a cache memory as recited in claim 2 wherein when said new line is prefetched into the cache memory, performing the following additional steps of testing the R-bit for the new line to determine if it is on, and if it is not, turning said S-bit and said R-bit on.

8. The method of prefetching lines into a cache memory as recited in claim 7 wherein when said next sequential line is prefetched into the cache memory, further comprising the step of turning the S-bit and the R-bit off at the new entry of the cache memory.

9. The method of prefetching lines into a cache memory as recited in claim 1 wherein when said new line is prefetched into the cache memory, performing the following additional steps of testing to determine if the line is in the Least-Recently-Used position, and if it is, turning the S-bit for the line on.

10. The method of prefetching lines into a cache memory as recited in claim 9 wherein when said next sequential line is prefetched into the cache memory, preforming the additional step of turning the S-bit off for that line.

Access Address Bits

Congruence
Class
Selection

Cache

## FIG. 1

PRIOR ART

I/E−Units

Cache

$\cdots$ | $L_{i-1}$ | $L_i$ | $L_{i+1}$ | $\cdots$

Memory

## FIG. 1A

FIG. 2

Cache Directory Entry

| Address | V | R | • • • |
|---|---|---|---|

Address       Address Identification of Cache Line
V-Tag        Validity Tag
R-Tag        Reference Tag

S-Vector  (History of Sequentiality)

Conceptual:  One Bit $(S_i)$ per Physical Line $(L_i)$

| | $L_{i-1}$ | $L_i$ | $L_{i+1}$ | | Memory |
|---|---|---|---|---|---|

| | $S_{i-1}$ | $S_i$ | $S_{i+1}$ | | S-Vector |
|---|---|---|---|---|---|

FIG. 3

```
                                    ┌──────────────┐ 100
                                    │ Cache Access │
                                    │     From     │
                                    │  I/E-Units   │
                                    └──────────────┘
                                           │
                                           ▼
                              ╱────────────────╲  110
                    Yes      ╱      Cache        ╲      No
                ◄───────────◄        Hit?         ►───────────►
                            ╲                    ╱
                             ╲──────────────────╱
                    │                                         │
                    ▼                      120                ▼
            ┌──────────────┐                         ┌──────────────┐ 130
            │ Access Data  │                         │ Fetch the Line│
            └──────────────┘                         │   via Miss   │
                    │                                 │   Handler    │
                    ▼         140                     └──────────────┘
            ╱────────────────╲                               │
   Yes     ╱     Is Line      ╲     No                       │
◄─────────◄    at the MRU      ►─────────►                   │
          ╲    Position?      ╱          │                   │
           ╲────────────────╱            ▼   150             │
   │                                ┌──────────┐             │
   ▼                                │  Turn    │             │
  Done                              │  R-Bit   │             │
                                    │   ON     │             │
                                    └──────────┘             │
                                         │                   │
                                         ▼                   ▼
                                    ┌────────────────────────────┐ 160
                                    │   Make  the  Line  MRU     │
                                    └────────────────────────────┘
                                              │
                                              ▼    200
                                       ╱─────────────╲
                                      ╱   Test for    ╲
                                      ╲   Prefetch    ╱
                                       ╲─────────────╱
```

FIG. 4

## FIG.5

Is the Associated S-Bit ON? 205

No → NO Prefetch

Yes → Is the Sequential Next Line in Cache? 210

No → Prefetch the Sequential Next Line into Cache
Turn R-Bit OFF at New Entry
Keep New Line at LRU Position 220

Yes → No Prefetch

## FIG.6

When Replace Line $L_{i+1}$ from the Cache 300

Is the R-Bit ON? 310

Yes → No Change to $S_i$-Bit Or, Turn $S_i$-Bit ON 320

No → Turn $S_i$-Bit OFF 330

When Miss on
Line $L_{i+1}$ from
I/E-Unit                    400

Is
Line $L_i$ in
Cache?                      410

Yes                         No

Turn
$S_i$-Bit      420          No Change
ON                          on $S_i$-Bit      430

# FIG. 7

When Miss on
Line $L_{i+1}$ from
I/E-Unit                    400

Is
Line $L_i$                  450
Accessed
Lately?

Yes                         No

Turn
$S_i$-Bit      460          No Change
ON                          on $S_i$-Bit      470

# FIG. 8

140

152

Is
R-Bit
ON?

No

Yes

154

Turn ON
$S_i$-Bit
R-Bit

FIG. 9

160

205

Is the
Associated
S-Bit
ON?

No

Yes

NO
Prefetch

210

Is the
Sequential
Next Line
in Cache?

No

Yes

220a

Prefetch the
Sequential Next
Line into Cache
Turn S-Bit OFF
Turn R-Bit OFF
at New Entry
Keep New Line
at LRU Position

No Prefetch

FIG. 10

140

156

Is
the Line
LRU?

FIG. 11

Yes

No

158 — Turn ON
$S_i$ –Bit

160

No

205

Is the
Associated
S–Bit
ON?

Yes

NO
Prefetch

210

No

Is the
Sequential
Next Line
in Cache?

Yes

220b

Prefetch the
Sequential Next
Line into Cache
Turn S–Bit OFF
Keep New Line
at LRU Position

No Prefetch

FIG. 12